(19) Europäisches Patentamt
European Patent Office
Office européen des brevets

(11) **EP 0 476 192 B1**

(12) **EUROPEAN PATENT SPECIFICATION**

(45) Date of publication and mention
of the grant of the patent:
**24.06.1998  Bulletin 1998/26**

(51) Int Cl.[6]: **G01N 21/35**, G01N 33/48,
G06F 17/12, G06F 17/18

(21) Application number: **90310218.4**

(22) Date of filing: **18.09.1990**

(54) **Characterizing matter of biological origin using near infrared spectroscopy**

Verfahren zur Kennzeichnung eines Materials biologischer Herkunft, unter Verwendung der Nah-Infrarotspektroskopie

Méthode pour caractériser un matériau d'origine biologique, par utilisation de la spectroscopie dans l'infrarouge proche

(84) Designated Contracting States:
**DE DK ES FR GB IT NL SE**

(30) Priority: **18.09.1989  US 408747**

(43) Date of publication of application:
**25.03.1992  Bulletin 1992/13**

(73) Proprietor: **THE BOARD OF REGENTS OF THE UNIVERSITY OF WASHINGTON
Seattle, Washington 98195 (US)**

(72) Inventor: **Callis, James B.,
Board of Regents Univ.Washington
Seattle - Washington 98195 (US)**

(74) Representative: **Baillie, Iain Cameron et al
c/o Ladas & Parry
52-54 High Holborn
London WC1V 6RR (GB)**

(56) References cited:
US-A- 4 805 623

- **ANALYTICAL CHEMISTRY vol. 58, no. 8, 1986, US pages 874A - 876A; M.D.W.: 'NEAR IR SPECTROMETRY IN CLINICAL ANALYSIS'**
- **APPLIED SPECTROSCOPY REVIEWS. vol. 22, no. 4, 1986, NEW YORK US pages 335 - 399; E.STARK ET AL.: 'NEAR INFRARED ANALYSIS (NIRA)'**
- **APPLIED SPECTROSCOPY REVIEWS. vol. 23, no. 1-2, 1987, NEW YORK US CIURCZAK: 'USE OF NIR SPECTROSCOPY'**
- **ANALYTICAL CHEMISTRY.A. vol. 55, no. 12, 1983, COLUMBUS US pages 1165A - 1176A; D.L.WETZEL: 'NIRA SLEEPER AMONG SPECTROSCOPIC TECHNIQUES'**
- **FOOD CHEMISTRY vol. 29, 1988, GB pages 233 - 238; B.G.OSBORNE ET AL.: 'discriminant analysis of black tea by nirs'**
- **ANALYTICAL CHEMISTRY.A. vol. 55, 1983, COLUMBUS US pages 1703 - 1707; H.J. KISNER: 'multiple analytical frequencies and standards'**
- **LANCET THE. 1986, LONDON GB pages 1063 - 1066; J.S.WYATT ET AL.: 'quantification of cerebral oxygenation and haemodynamics'**
- **AMERICAN JOURNAL OF PHYSIOLOGY vol. 256, no. 5-2, 1989, US pages 1493 - 1499; FERRARI ET AL.: 'noninvasivs determination of hemoglobin saturation'**
- **ANALYTICAL INSTRUMENTATION, 14(1), 1-62, (1985).**

**Description**

Field of the Invention

The present invention relates to the analysis of a sample of matter of biological origin using the near-infrared (NIR) spectrum of that biological matter having a water content. The method permits prediction of a property of interest because the biological matter may be approximated to contain two compartments where one compartment has a proportionally larger or smaller amount of water than the other compartment having the property of interest. Analysis of an unknown sample is achieved by use of mathematical techniques developed using a NIR spectral training set of known samples and independent quantification of the property of interest in the known samples in that training set.

Background of the Invention

Presence of water in an organism is the common denominator of life. The corpus of an organism is compartmentalized with each compartment capable of being distinguished by the amount of water it contains. The processes of osmosis and reverse osmosis in an organism act to stabilize this compartmentalization.

Determination of the volume fraction or percentage concentration of components other than water in the various compartments of biological matter, such as tissue or blood, is often critical to the determination of the well-being or homeostasis of the organism. Whether in the botanical, medical, zoological or veterinary arts, because the circulation of biological fluid or existence of certain biological tissue in an organism is necessary for life, the diagnosis of such biological matter provides an excellent medium to assess the homeostatic condition of the organism.

Blood of animals circulates essential nutrients of life. Erythrocytes, red blood cells, flowing in the blood plasma carry oxygen to all other cells of the organism. Hematocrit is the volume fraction of agglomerated erythrocytes in whole blood. Hemoglobin is the chemical molecule in the erythrocytes which transports oxygen to the cells. Hemoglobin may take several forms depending on the presence or absence of oxygen or other chemicals which may be bonded to active sites in the hemoglobin molecule. Hematocrit in whole blood has been found to have a suitable direct mathematical correlation to the concentration of hemoglobin, providing the blood has few or no lysed erythocytes.

Water is omnipresent in whole blood. Hemoglobin is dissolved in the erythrocytes while plasma is principally water. But the amount of water in which hemoglobin is dissolved, and hence in erythrocytes, is comparatively less than the amount of water in the plasma.

Clinical analysis of an organism requires monitoring of the status of or the changes in condition. As a result of injury or illness or other deleterious biological conditions, the hematocrit or the concentration of hemoglobin in erythrocytes available for oxygen transport to the cells of the organism may be diminished below healthy levels even to the point of critical life sustaining levels. Also, analysis of various types of anemia is vital to continuing successful treatment of a patient, especially in critical care facilities such as emergency rooms, operating rooms, or intensive care units, including neo-natal units. Less traumatic but just as vital, most blood donors must undergo hematocrit testing to assure that their blood to be donated has appropriate hemoglobin levels for later use.

Several types of techniques have been known for the analysis of blood during patient care. Hemoglobin concentrations are measured traditionally using lengthy and complicated procedures which require the preconditioning, i.e., chemical modification or component separation, of a blood sample withdrawn from the body. The traditional methods destroy the blood, preventing its return to the body.

One popular method for the determination of hemoglobin involves (1) lysing the red blood cells by hypotonic shock or sonification, (2) removal of the red blood cell membranes to produce a clear solution, (3) addition of a cyanide ion reagent to normalize or convert the various forms of hemoglobin to a single form hemoglobin (e.g., cyanomet hemoglobin), and (4) spectrophotometric analysis to derive the hemoglobin concentration of the normalized sample.

Because of the complicated chemical procedure for determination of hemoglobin concentration, and because of the known direct correlation between hematocrit and hemoglobin concentration, methods for independently determining hematocrit have been developed.

The most common methods for measurement of hematocrit can be divided into two categories: centrifugal attribution in a test tube of specific diameter and Coulter counting.

Centrifugal attribution involves centrifuging of blood withdrawn from the body in a tube of specific diameter at preselected centrifugal forces and times that serve to separate the blood into two portions. The heavier portion is the agglomeration of erythrocytes in the whole blood. The lighter portion is plasma dominated by water. The ratio of the volume of the erthrocytes to the total volume of the blood sample in the centrifuge tube is the hematocrit.

Coulter counting determines hematocrit by physical counting of red blood cells and a determination, through the size of each cell on a cell-by-cell basis, the volume of each. After a predetermined number of blood cells are counted, the hematocrit is determined by the number of red blood cells counted multiplied by the mean volume of the blood cells for a given blood sample.

As may be understood by considering such current methods, considerable manipulation and laboratory analysis is necessary for each individual blood sample drawn from the body of the patient. Whether measuring hematocrit or hemoglobin concentration, the blood sample is withdrawn from the patient and inevitably taken from the immediate vicinity of the patient for analysis using expensive, stationary instrumentations that require preconditioning of the sample in order to analyze it.

Efforts to spectrally analyze blood samples for hematocrit or hemoglobin concentration have been attempted. U. S. Patent 4,243,883 describes a monitor of a flowing stream of blood using a discrete near-infrared wavelength. U.S. Patent 4,745,279 describes a dual path NIR spectral analysis at discrete wavelengths of flowing whole blood. U.S. Patent 4,805,623 describes a NIR spectral method and apparatus using multiple wavelengths to determine the concentration of a dilute component of known identity in comparison with a reference component of known concentration.

The near-infrared (NIR) spectral region of electromagnetic radiation, from about 680 nanometers to 2700 nanometers, contains absorbance peaks for the various forms of hemoglobin and water. Prior spectral analytical efforts have focused on the measurement of the diffuse transmission or reflectance of near infrared light through blood samples. However, light scattering in the samples and other properties which interfere with accurate measurement cause variances in the specific spectrum taken. As a result, even using measurements taken with sensitive instrumentation is not satisfactory. Moreover, the choice of specific wavelengths in near-infrared spectra for which whole blood samples may be best monitored is not straightforward due to variances in the broad peaks of water and various forms of hemoglobin in such NIR spectra.

Even with the best monitoring wavelengths being chosen, one must address the variability caused by the effective path length that the transmitted or reflected near-infrared radiation takes between excitation and detection through the blood sampling. Prior efforts to employ NIR spectral analysis have either discounted the importance of determining effective path length or required procedures to establish the effective path length prior to completing the spectral analysis. In the former case, reproducible precision suffers; in the latter case, a complicated methodology is employed.

Analytical Chemistry, Vol. 58, No. 8, July 1986, pp 874A-876A reports work of one of the present inventors, James B. Callis, and teaches that pH and electrolyte status of aqueous solutions can be determined from shifts in the NIRA bond of water using multivariate statistical data analysis. This report also refers to a plan "to use the ratio of the water band to the haemoglobin band to determine hematocrit". There is also a reference to a measurement of body fat by measuring the ratio of the C-H bands to the water band.

Analytical Instrumentation 14(1), pp 1-62 (1985) (David E. Honigs) discloses NIRA methods useful for determining the properties (eg. water and protein content) of biological samples, eg. grain and involving:

a) irradiating with near infrared light multiple samples of biological matter;
b) detecting the near infrared spectrum of each of the multiple samples;
c) applying, in respect of each of the multiple samples, a preprocessing technique to the absorbance bands of the samples;
(d) independently quantifying the property to be analyzed for each of said multiple samples;
(e) establishing a training set from said absorbance band in said pre-processed near infrared spectra of said multiple samples and said independently quantified property by statistically identifying the nature of a mathematical correlation between the property to be analyzed and the pre-processed absorbance band in said samples;
(f) irradiating an unknown sample of the biological matter with near infrared light;
(g) detecting the near infrared spectrum, including said absorbance band, of said unknown sample;
(h) applying said pre-processing technique to said absorbance band in said spectrum of said unknown sample; and
(i) predicting the property to be analyzed in said unknown sample by utilizing said mathematical correlation obtained in said statistically identifying step (e).

This article teaches that most NIRA calibration algorithms use "local methods", ie. using a small number of absorbance terms rather than the whole recorded spectrum and teaches that whilst the simplest and most desirable local regression algorithms the all possible combinations wavelength search, it is impractical for moderate to large data sets. Various faster but less exhaustive algorithms are discussed, including step-up regression, and the use of algorithms based on derivatives of the NIRA spectrum is disclosed; in particular algorithms based on the first derivative, the second derivative, a ratio of first derivatives and a ratio of second derivatives.

It is taught in this article that derivative techniques can utilise the above relatively fast step-up regression technique because they eliminate broad band interferences such as those caused by baseline drift, hydrogen bonding and variations in particle scattering.

Thus, what is needed is a method for accurately determining through NIR spectral analysis a property of a sample of biological matter which is rapid, inexpensive, accurate, precise, and which takes into account such spectroscopic variabilities as effective path length of the reflected or transmitted light or where instrumentation may be using either a continuous measurement of absorbance wavelengths across a NIR spectra or at discrete wavelengths thereof.

## Summary of the Invention

The present invention provides a method for rapidly, inexpensively, and accurately characterizing the properties of matter of biological origin containing water by analyzing the near-infrared spectrum of the biological matter using techniques useful with NIR spectral instrumentation and predicting the properties without sample preconditioning. The techniques seek to minimize the effect of light scattering and use mathematical regression analysis to permit transforming the observed spectrum into a prediction of the property to be analyzed.

The method of the present invention avoids chemical alteration or physical separation of the components in the sample of biological matter. The method also avoids inaccuracies caused by irrelevant variations in samples and instrumental noise in measurement techniques.

The method of the present invention is as according to independent claims 1, 14.

The method of the present invention is founded on the principle that the biological matter may be considered to consist of essentially two compartments: one compartment which has a proportionally different (larger or smaller) amount of water than the other compartment related to or having the property to be analyzed. The present invention is also founded on the principle that identification of the volume or weight fraction or concentration of water in the biological matter will serve as the basis for calculation of the property to be analyzed. The method of the present invention is further founded on the principle that the establishment of a training set of the combination of NIR spectra of several samples of the biological matter and the independent quantification of the property to be analyzed in each sample provides a source of mathematical comparison for accurately predicting the property to be analyzed in an unknown additional sample by using such mathematical comparison.

When the biological matter is whole blood, prediction of the hematocrit or hemoglobin concentration is achieved by obtaining near-infrared spectra of a statistically sufficient number of samples of whole blood to establish a training set for mathematical comparisons against individual additional unknown samples of other whole blood. Further, the property to be analyzed in the whole blood, e.g., hematocrit or hemoglobin concentration, is independently quantified by using an independent known technique: lysing and chemical alteration for hemoglobin and Coulter counting or centrifuging for hematocrit.

Having established a training set of NIR spectra and independently quantified the hematocrit or hemoglobin concentration in each sample in the training set, the nature of the inter-relationship between the hematocrit or hemoglobin and the water content is statistically correlated to establish the source of comparison when predicting unknown samples.

To minimize variability when establishing the training set and when predicting the properties of the compartment being analyzed in the unknown sample, a pre-processing technique is employed.

A pre-processing technique of the present invention utilizes a multiple derivative transformation of the training set spectra and the unknown sample's spectrum to minimize the effect of light scattering and other instrumental noise on the various spectra, in order to allow a mathematical correlation using the multiple derivative of the spectral intensity at a single wavelength to accurately predict the property of the compartment being analyzed in the unknown sample.

For purposes of full disclosure, a different and useful type of pre-processing technique invented by the applicant and another is known. A ratio pre-processing technique using two wavelengths of spectra is disclosed in European Patent Publication 0 419 222, which is based on an application claiming priority from U.S. Patent Application Serial Number 07/408,746, and European Patent Publication 0 419 223, which is based on an application claiming priority from U.S. Patent Application Serial Number 07/408,890.

In the case of hematocrit or hemoglobin concentration determinations, through mathematical regression analysis, it has been found that use of the absorbance peak of water appearing in NIR spectra in the range of from about 1150 to about 1190 nanometers (nm) provides an accurate and reproducible peak for multiple derivative transformation pre-processing techniques, notwithstanding a known decrease in detector efficiency using silicon detectors in this range of wavelengths. This peak of absorbance of water in the 1150-1190 nm range is largely isolated from the absorbance of hemoglobin either in its oxygenated state or in its deoxygenated state. The absorbance peak of water in this region is primarily the result of simultaneous excitation of the symmetric O-H stretch, the O-H bending mode, and the antisymmetric O-H stretch of the water molecule, whether existing in the biological matter as free water, bound to other molecules, or other forms.

Gathering the training set spectral data for the samples of the biological matter depends on the type of instrumentation to be employed. To establish the training set, in one embodiment, the biological matter is withdrawn from the body of the organism.

For purposes of full disclosure, a different and useful method of gathering spectral data employing a blood loop is disclosed in European Patent Publication 0 419 223, which is based on an application claiming priority from U.S. Patent Application Serial Number 07/408,890. In that instance, the blood is diverted from the body of the organism and returned. Additionally, the biological matter may be measured within the body of the organism.

However, to provide the independent quantification of the property to be analyzed from the training set samples, a sample of the biological matter must be withdrawn from the organism and often cannot be returned to the organism because of chemical alteration or physical separation of the compartment in the matter.

Obtaining the unknown sample spectral data for analysis also depends on the type of instrumentation to be employed. In an embodiment of the present invention, the unknown sample is withdrawn in the same manner as the samples of the biological matter comprising the training set.

Processing and instrumentation variabilities are dependent upon the method by which the training set is established and the method by which the unknown samples are analyzed. In the case of in vitro (NIR) spectral analysis, the biological fluid is stationary when being spectrally analyzed, a static condition.

When the biological fluid is whole blood and the hematocrit or the concentration of hemoglobin is desired, after the training set is established and the pre-processing technique has been used to minimize sample and instrumentation variability, a sample of whole blood is withdrawn from a patient and spectrally analyzed in a stationary configuration either using transmission detection or reflectance detection.

The method of detection employed must be the same for both the establishment of the training set and the investigation of the unknown sample. Because of the use of the pre-processing technique, variations due to sampling techniques and instrumentation factors such as effective path length are minimized.

The NIR spectrum of the unknown sample is obtained from either continuous or discrete wavelength measuring instrumentation. After the spectrum is obtained and subjected to the pre-processing, the property of interest may be predicted by a mathematical correlation to the training set spectra.

In the case of the measurement of hematocrit or hemoglobin concentration in an unknown sample of whole blood, after the NIR spectrum of the unknown sample is obtained and subjected to pre-processing, application of mathematical techniques comparing the training set spectral data for the hematocrit or the hemoglobin concentration with the unknown sample's spectra allows prediction of the hematocrit or the hemoglobin concentration in the unknown sample.

For an additional appreciation of the scope of the present invention, a more detailed description of the invention follows, with reference to the drawings.

Brief Description of the Drawings

FIG. 1 is a schematic block diagram of the instrumentation useful in a method carried out in accordance with the present invention.

FIG. 2 is a schematic flow chart of the methods to mathematically minimize variability of spectral data and establish the mathematical correlation between known samples and the training set spectra, in order to permit the predicting of the property of interest in an unknown sample by comparison with the mathematical correlation.

FIG. 3 is a graphic representation of typical whole blood spectra indicating the effects of typical light scattering variances and other instrumental noise variances.

FIG. 4 is a graphic representation of the same whole blood spectra as in FIG. 3 after the application of the second derivative transformation to minimize the effects of typical light scattering variances and other instrumental noise variances.

FIG. 5 is a correlation plot of correlation coefficient versus wavelength for hematocrit after the spectra data were second derivative pre-processed and regression analysis of the spectral data was performed against hemoglobin.

FIG. 6 is a correlation plot of correlation coefficient versus wavelength for hemoglobin after the spectra data were second derivative pre-processed and regression analysis of the spectral data was performed against hemoglobin.

FIG. 7 is a graph showing the accuracy of prediction of hematocrit using the methods of the present invention compared with actual hematocrit determined by prior art methods.

Embodiments of the Invention

One embodiment of the present invention is the analysis of hematocrit in whole blood. Another embodiment of the present invention is the analysis of hemoglobin concentration in whole blood. There are occasions when either analysis may be preferred. But generally, it is recognized that the determination of hematocrit is an excellent correlation to the concentration of hemoglobin in whole blood. However for versatility of the system, it should be recognized that one or more methods of independent quantification of the property to be analyzed may be used to provide alternative clinical diagnosis of the condition of the patient.

It should also be recognized that the property of the biological matter to be analyzed must have some correlation either positively or negatively with the water content in order to develop a mathematical correlation therefor in accordance with the present invention. That may not preclude the presence of other components in de minimus volume fractions or concentrations. For example, in whole blood, the presence of white blood cells, platelets, hydrocarbonaceous lipids, and the like are not present in sufficient quantity at the desired level of precision to destroy the validity of the mathematical correlation found.

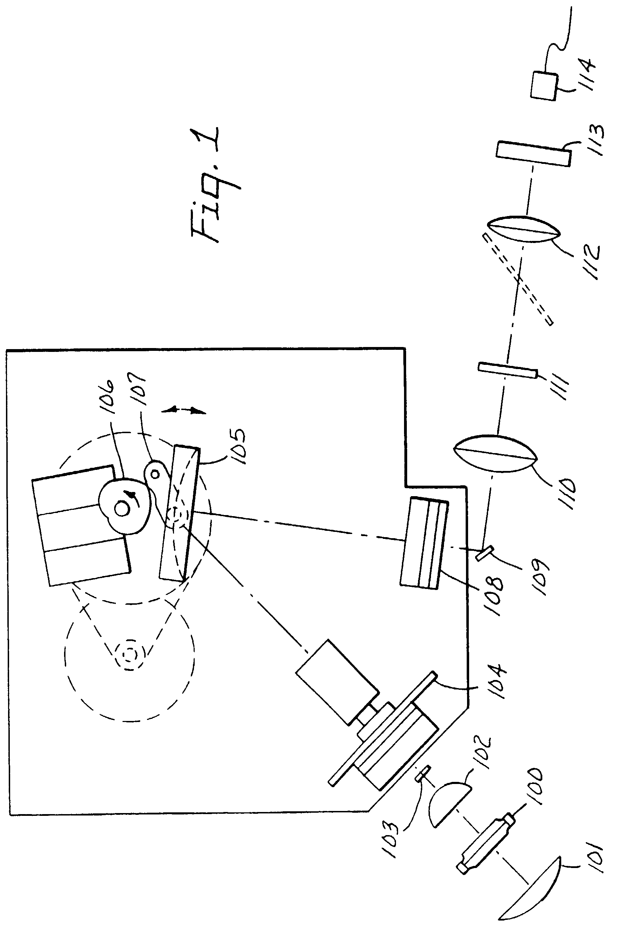

FIG. 1 identifies the schematic block diagram of spectral instrumentation useful in establishing the training set initially and thereafter predicting the property of the compartment to be analyzed in one or more unknown additional samples.

FIG. 1 illustrates a typical instrumentation system available which can be used for obtaining the near infrared spectrum of a biological fluid, such as whole blood. Specifically, FIG. 1 identifies a Model 6250 spectrophotometer manufactured by Near Infrared Systems of Silver Spring, Maryland, formerly known as Model 6250 made by Pacific Scientific. The radiation from a tungsten lamp 100 is concentrated by a reflector 101 and lens 102 on the entrance slit 103 of the monochromator and thereafter passed through an order sorting filter 104 before illuminating a concave holographic grating 105 to disperse the radiation from the tungsten lamp 100 onto the sample 113 in a cuvette, optical blood loop or in the body of the organism. The grating 105 is where the wavelength dispersion occurs. The grating is scanned through the desired wavelength range, typically 680 to 1235 nanometers, by the rotating cam bearing 106, which is coupled to the grating by linkage assembly 107. The selected wavelength passes through exit slit 108 and is guided through the sample 113 by mirror 109, iris 111, and lenses 110 and 112. After passing through the sample, the remaining radiation is converted to an electrical signal by detector 114.

Other types of instrumentation are also acceptable for use with the methods of the present invention. Monochromators such as Model HR 320 available from Instruments S.A. are useful. Polychromators such as the Chemspec Model 100S available from American Holograph or Model JY320 also available from Instruments S.A. may be used to gather the spectral data to establish the training set.

Detection means may employ either diffuse transmittance detection devices or reflectance devices available commercially. The Model 6250 spectrophotometer may be configured to detect either diffuse transmittance or diffuse reflectance. Depending on factors such as cost, wavelength range desired, and the like, the detector 114 may be a silicon detector, a gallium arsenide detector, a lead sulfide detector, an indium gallium arsenide detector, a selenium detector or a germanium detector.

Whichever detector is chosen, it is preferred to be consistent in the usage of same detection means for establishing the training set spectra and for measuring the unknown sample's spectrum.

Alternately, polychromatic analyzers using a reversed beam geometry may be used to disperse the transmitted or reflected light into its spectral components and photodiode arrays may be used to detect or measure the dispersed light at different positions along the output spectral plane.

Other types of array detectors include charge coupled devices, charge injection devices, silicon target vidicons, and the like. Desirably, the polychromatic analyzer should include an entrance slit that defines the bandwidth of light which is consistent with the spectal resolution desired. One commercially available photodiode array useful with the present invention is Model 1024S photodiode array available from Reticon, Inc., which consists of 1024 diodes of 25 micron width and 2.5 millimeters height. That photodiode array may be used in a complete spectral detection system such as Model ST120 available from Princeton Instruments.

One can also use interference filters as spectroanalyzers, for example, by passing a series of discrete wavelength interference filters one at a time before a suitable detector. It is also possible to use interferometers or a Hadamard transform spectrometer to analyze the diffuse light.

The above detection means are based on detection of spectra from a broad band light source. However, if narrow band sources of NIR light are to be used, such as tungsten lamps with interference filters, light emitting diodes, or laser (either a single tunable laser or multiple lasers at fixed frequencies), other detection techniques may be used. For example, the input signal can be multiplexed either in time, (to sequence each wavelength), or in wavelength (using sequences of multiple wavelengths), and thereafter modulated and the collected signals demodulated and demultiplexed to provide individual wavelength signals without the need for optical filtering.

Regardless of the instrumentation selected, it is preferred to use a computer connected to the instrument to receive the spectral data, perform the analysis described below, and provide a printout or readout of the value of the property predicted. When using spectrometric instruments such as the Model 6250 Spectrometer described above, a personal computer such as a "PS/2" Model 50 computer from IBM of Boca Raton, Florida is used and preferred.

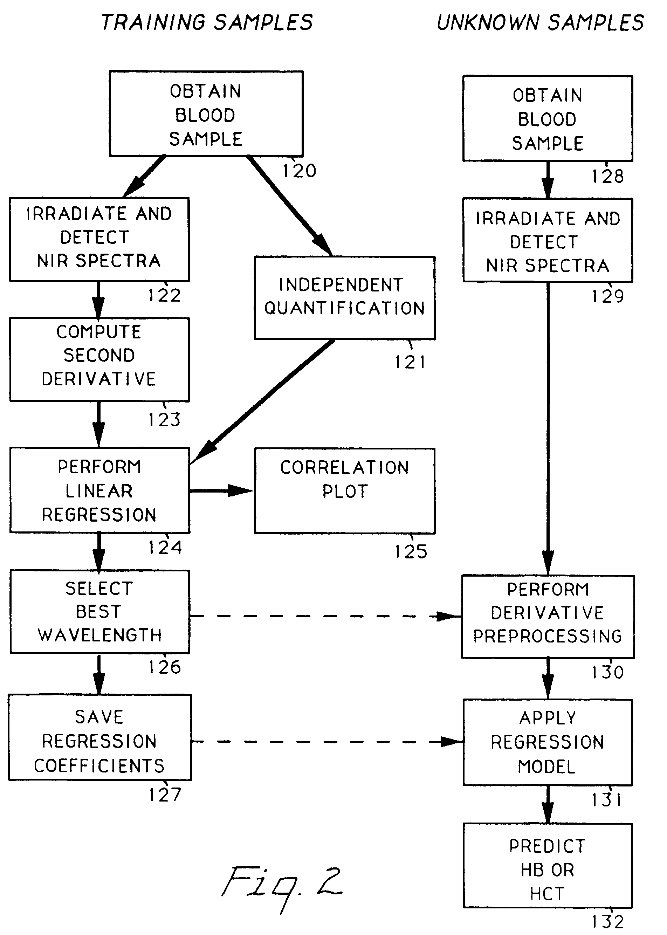

FIG. 2 is a schematic flow chart of the multiple derivative transformation pre-processing technique employed to minimize sample and instrumentation variability and the regression analysis to identify the nature of the mathematical correlation between the property to be analyzed in the first compartment and the water content in the biological matter, in order to predict the property of the compartment to be analyzed in an unknown sample.

The schematic flow of the processing steps involved in determining the property of interest in the biological matter, such as hematocrit or hemoglobin concentration, can be broadly divided into two parts: steps 120 to 127 which comprise the training phase of the analysis and steps 128 to 132 which comprise the prediction of the property of an unknown sample.

The training or calibration development phase consists of obtaining a series of blood samples 120 by obtaining the samples from one or more animals of the same species, by withdrawing the samples from the organisms. Each training sample is analyzed on two parallel paths.

The first path consists of independent quantification of the property of interest, step 121. It is important that the independent quantification be done accurately. The accuracy of the method of the present invention is dependent upon the accuracy of the independent quantification step 121 because validation of the mathematical correlation is based on the independently quantified value of the property of interest.

The second path consists of irradiating the samples with infrared light and detecting the near infrared spectrum for each sample, step 122, and then computing the second derivative of the spectra, step 123. It should be understood that reference to detecting the near infrared spectrum involves both the measurement of diffusely transmitted or reflected spectrum and the transformation of that spectrum to an absorbance spectrum. The transformation is based on having taken spectrum of the cell containing only air for calibration purposes.

When the near infrared spectrum has been detected on a Near Infrared Systems model 6250 spectrophotometer, the near infrared spectrum from 680 to 1235 nanometers consists of 700 individual absorbance measurements. The second derivative transformation preprocessing step computes less than the total 700 measurements because some transformations are not available at the edges of the spectra. When using software such as "Near Infrared Spectral Analysis" commercially available from Pacific Scientific, now known as Near Infrared Systems of Silver Spring, Maryland, one may compute an approximated derivative by using finite difference approximations. Different approximations may yield different derivative spectra and different transformation equations. In such software, different approximations may be obtained by varying the segment of the spectrum being measured and the gap between segments being measured. Using different derivative approximations may result in a different set of regression coefficients, which may affect the accuracy or precision of the prediction of the property being analyzed. It is therefore prudent to evaluate a wide range of segments and gaps in order to ascertain which selection is best for the particular analysis contemplated.

The preprocessed spectra for the set of training samples subjected to second derivative transformation, step 123, are correlated with the values obtained during the independent quantification step 121 by using a mathematical regression technique, step 124, such as linear regression. The second derivative value providing the best correlation of calculated value to actual value is generally the single wavelength chosen for the mathematical correlation.

One of the outputs of this regression step is a correlation plot, step 125, which graphically shows the wavelength of the spectrum where the highest correlation is found. The best transformed wavelength, step 126, is selected by identifying the peak of optimum correlation. The regression coefficients corresponding to the selected wavelength are saved, step 127, for future application to the analysis of individual samples to predict the property of interest.

The steps 128 to 132 in FIG. 2 show the procedure to be followed for predicting hematocrit (abbreviated as HCT in FIG. 2) or hemoglobin (abbreviated as HB in FIG. 2) concentration in an individual unknown sample. A blood sample of unknown hematocrit or hemoglobin concentration, step 128, is obtained and the near infrared spectrum of this sample is detected, step 129.

While the near infrared spectrum of additional unknown samples may also be detected on exactly the same instrument as the training samples were detected or measured and from which the training set is prepared, it is also acceptable to use a simpler instrument which will provide the absorbance at only the three minimal wavelengths necessary to compute a second derivative transformation of the best wavelength.

The second derivative intensity for the best wavelength determined in step 126 is computed for the unknown sample, step 130. Then the regression coefficients contained in the mathematical correlation, determined during the training procedure and saved in step 127, are applied to the second derivative wavelength obtained for the additional individual unknown blood sample 131, in order to yield the predicted hematocrit or hemoglobin concentration, step 132.

The pre-processing technique of multiple derivative transformation serves to eliminate the variances of spectral data caused by scatter in each of the various samples of both the training set and each unknown sample. This scatter would otherwise disrupt the accuracy of the detection of the training set and its ability to predict the property of the unknown sample.

If the near infrared spectrum consists of N individual wavelengths, computing the second derivative transformation provides N spectral features less the loss of features at the edges of the spectrum. In FIG. 2, such computation is shown at step 123. The best wavelength must be chosen from the myriad of N transformed wavelengths using regression mathematical techniques, as is shown in FIG. 2 at step 124, depicted in a correlation plot at step 125, and selected at step 126 for use to determine the best possible regression coefficients in step 127 and for use with each unknown sample in step 130.

Any of a number of regression techniques; such as, linear regression, multiple linear regression, stepwise regression, partial least squares regression, or principal component regression can be used to develop a statistical correlation between the spectral features and the value of the property being quantified. Such regression techniques are available by reference to such literature as Draper and Smith, Applied Regression Analysis, Wiley and Sons, New York, 1982 and Geladi and Kowalski, Analytica Chimica Acta, Volume 185, pp 1-17 and 19-32, 1986, the disclosures of which are incorporated by reference herein.

In order to determine the best wavelength for a given application, regression models are computed against all of the possible N transformed wavelengths.

Each regression model is evaluated by using an accepted statistical measure. For example, one useful measure is the simple correlation coefficient computed from the actual hematocrit value obtained from the independent quantification and the predicted hematocrit value obtained from the regression model, as is shown in FIG 2 at step 126.

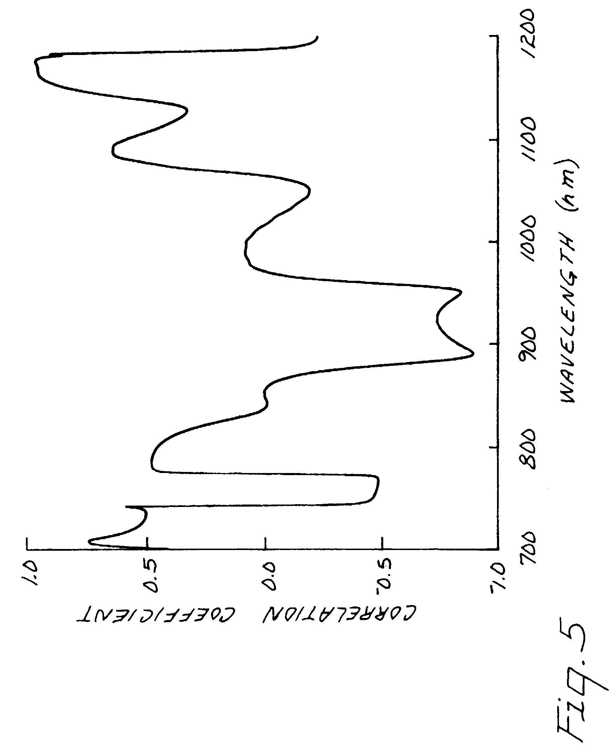

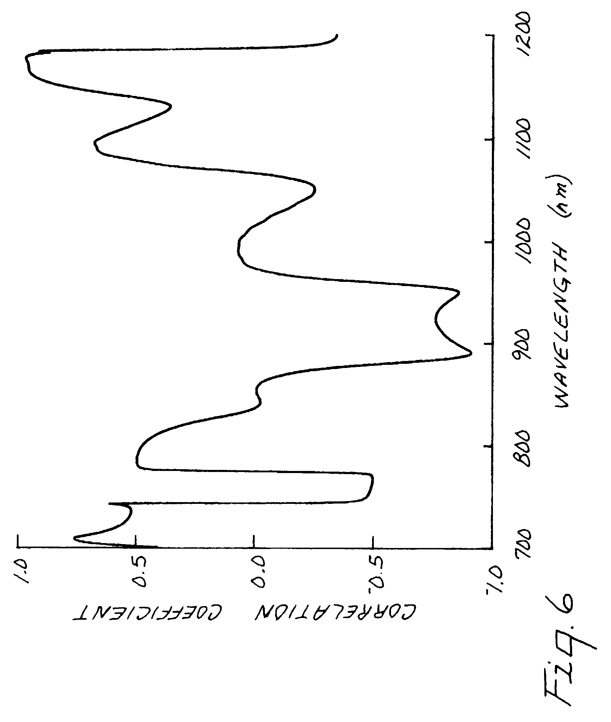

A correlation plot can be constructed to visually show which wavelength provides the highest correlation, as is shown in FIG. 2 at step 125. A representative correlation plot for hematocrit appears as FIG. 5 and a representative plot for hemoglobin appears as FIG. 6. It is important to consider both high correlation and also the sensitivity of the correlation obtained to measure small changes in the actual wavelengths.

Use of the spectral analytical instrumentation described above and depicted in FIG. 1 and the mathematical methods described above and depicted in FIG. 2 permit the analysis of the property of interest in the biological matter which contains water, so long as it is possible to develop a mathematical correlation between that property and water when establishing the training set through independent quantification of the property, spectra of the samples and use of preprocessing techniques to minimize variability.

The determination of the mathematical correlation or model is founded on the linear functional relationship of the multiple linear regression equation:

$$B_0 + B_1(A_1) + B_2(A_2) + ... B_n(A_n) = C$$

where $B_0$ is the intercept, $B_n$ is the regression coefficient for the nth independent variable, $A_n$ is the nth independent variable and C is the value of the property of interest to be analyzed. Solving this equation depends upon the determination of regression coefficient(s) including the intercept and providing the values of the independent variable(s).

When the linear functional relationship is less complex, the equation is more often expressed as the linear regression equation: Y - mx + b, where Y is the value of the property of interest to be analyzed, m is the regression coefficient indicating the slope of the line, b is the intercept of the line and x is the single independent variable. Thus, the mathematical correlation endeavors to yield a linear relationship between the single independent variable, which is the multiple derivative transformed intensity and the property of interest to be measured.

Once the mathematical correlation is established, it is validated. The accuracy in formation and performance is reviewed to assure reproducibility. The accuracy and precision of the mathematical correlation can be validated by physical interpretation of the selected spectral features or using additional samples analyzed by independent quantification, Step 121, and then subjecting those samples to Steps 128-132 as if the samples were unknown. Statistical methods may then be used to compare the value of the predicted property, Step 132, and the value determined by independent quantification, Step 121, to confirm reproducibility. Other validation may be also performed such as cross validation for internal consistency, and double blind assessment.

Standard error of calibration measures precision of the model of the spectra, i.e., how well the regression analysis performs with the data used to construct the training set. The standard error of calibration (SEC) can be calculated from the following equation:

$$SEC = \left[ \frac{1}{N_T - n - 1} \sum_{i=1}^{N_T} (C_i - \dot{C}_i)^2 \right]^{1/2}$$

where $N_T$ is the number of training samples, n is the number of absorbance terms in the regression technique employed, where $C_i$ is the hematocrit or hemoglobin value of the ith sample as calculated during linear regression and $C_i$ is the hematocrit or hemoglobin value of the ith sample as independently determined. The smaller the SEC, the more precise the model mathematical correlation has been formed.

More importantly, the standard error of prediction (SEP) measures the assurance of reproducible performance, i.e., a test to identify quantitatively the accuracy and precision of the prediction results obtained using the method of the present invention with the actual value for the property determined by independent quantification using known and accepted techniques and may be used in conjunction with a confidence limit to quantitatively express the accuracy of the prediction of the property being analyzed. Mathematically, the standard error of prediction can be calculated from the following equation:

$$SEP = \left[ \frac{1}{N_p - 1} \sum_{i=1}^{N_p} (C_i - \hat{C}_i)^2 \right]^{1/2}$$

where $N_p$ is the number of validation samples, $C_i$ is the independently quantified value for the ith validation sample, $\hat{C}_i$ is the value for the ith validation sample obtained using the mathematical correlation of step 131. Also, the smaller the SEP, the more accurate and precise the prediction.

Bias measures the extent of deviation of all points within a given data set in the solved mathematical equation from the line of exact correlation between predicted and actual values. Qualitatively, a low bias indicates the presence of a robustness of the training set spectra to tolerate possible error. In other words, the robustness of the training set sampling anticipates the variety of sampling possibilities for the unknown sample and minimizes its effect.

Without being limited thereto or thereby, the following examples illustrate the methods of the present invention used to analyze hematocrit and hemoglobin in whole blood.

<u>Example 1</u>

On five separate occasions, a number of whole blood samples were withdrawn from different individuals and subjected to NIR spectra irradiation using instrumentation described with reference in FIG. 1 to obtain the absorbance spectrum of each sample. Also, a blank reference spectrum was obtained using an empty cell. The diffusely transmitted light was gathered after traveling through the each sample in a cuvette 113. All of the measurements were taken at room temperature, which fluctuated randomly over a range of about 3 degrees C.

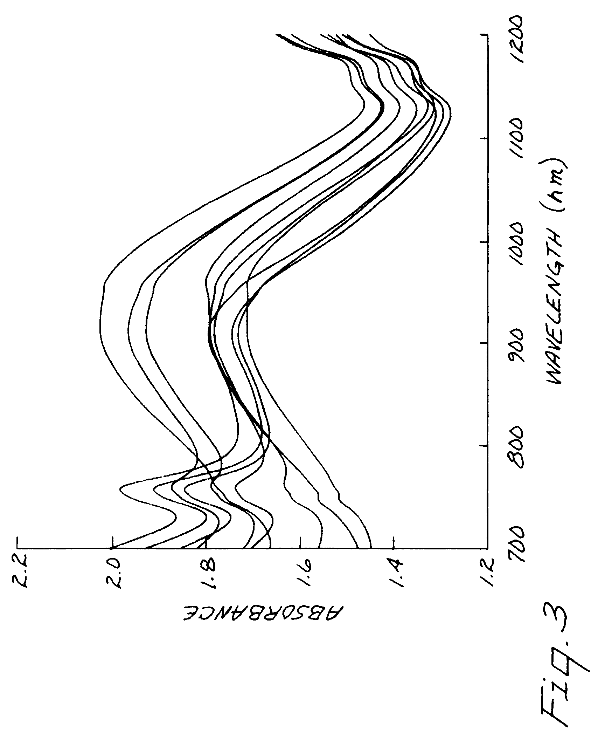

The individual sessions are identified in Table I below as sets A-E and the number of samples analyzed are identified as the number of spectra obtained, which varies from 36 to 45 samples per set. A representative group of samples from set E were graphed in FIG. 3 to indicate the possible ranges of variability of the spectral data against which mathematical correlations would otherwise be attempted to be calculated.

Through the use of Coulter counting, the hematocrit for each of the five sets was expressed in Table I below as a range varying from as low as 17 percent to as high as 50 percent. Similarly, except with respect to set A for which no values were obtained, the hemoglobin concentration range in each of the sets was determined by cell lysing, reaction with cyanide, and spectral measurement of cyanomet hemoglobin. The range for sets B-E of hemoglobin was from about 6.7 to about 17.0 grams per deciliter (g/dL).

Table I below further identifies the correlation of hematocrit to hemoglobin which demonstrated correlation for the spectra obtained in each of the five sets.

TABLE I

| Sets of Samples Spectrally Analyzed and Independent Quantification Ranges of Hematocrit and Hemoglobin | | | | |
|---|---|---|---|---|
| Sets | No. of Spectra Obtained | Hematocrit Range (Vol %) | Hemoglobin Range (g/dL) | Hematocrit/Hemoglobin Correlation |
| A | 36 | 17.6 - 45.1% | No Values | -- |
| B | 45 | 20.7 - 45.5% | 7.3 - 15.7* | 0.994 |
| C | 40 | 18.9 - 41.7% | 6.7 - 14.1 | 0.992 |
| D | 42 | 23.0 - 50.2% | 7.7 - 17.0 | 0.993 |
| E | 43 | 20.7 - 49.4% | 7.3 - 16.1 | 0.994 |

* One hemoglobin value was unavailable, leaving 44 values to determine the range.

While 206 individual samples and spectra were obtained in five sets for this example, generally, it is possible to develop a training set with independent quantification from as few as 25 samples to as many as an infinite number of samples.

The purpose of establishing a training set for comparisons and prediction purposes was to attempt to anticipate sampling differences which may exist in various individuals at various times. In other words, the training set spectra should be as broad as possible to include as many variances within each of the factors affecting the measurement of the property of interest.

Ideally, the training set includes samples that represent all of the different kinds of changes in the hematocrit and hemoglobin concentration over a full range of values likely to be encountered in an unknown sample as well as all of the other kinds of changes within each factor likely to affect blood sampling, e.g., temperature, amount of liquids, details of light scattering, presence of other components, and physiological condition of the patient.

Notwithstanding such ranges of hematocrit and hemoglobin in these sets, it was seen that the correlation between hematocrit and hemoglobin is precise over 0.99 in all cases.

Having established training sets A-E and independently quantifying the hematocrit and hemoglobin ranges within each of those sets, the mathematical analysis depicted in FIG. 2 is now performed. First, the second derivative pre-processing technique and linear regression to select the best wavelength and regression coefficients were performed against each of the five sets using with a computer software commercially available from Pacific Scientific, now known as Near Infrared Systems of Silver Spring, Maryland, and offered under the name "Near Infrared Spectral Analysis". While the Near Infrared Spectral Analysis software may be used to perform all of the analysis steps shown in FIG. 2, in these examples, steps 132 and 133 and computation of the SEC, SEP, and bias for validation purposes used software: "VAX IDL Interactive Data Language" available from Research Systems, Inc. (copyright 1982-1988) with a computer. In these Examples the approximated second derivative spectra obtained was based on the use of segment of 20 datapoints and a gap of 0 datapoints. Thus, each point for purposes of calculating the second derivative was a band 20 datapoints or 15.8 nm wide without any gap between the bands.

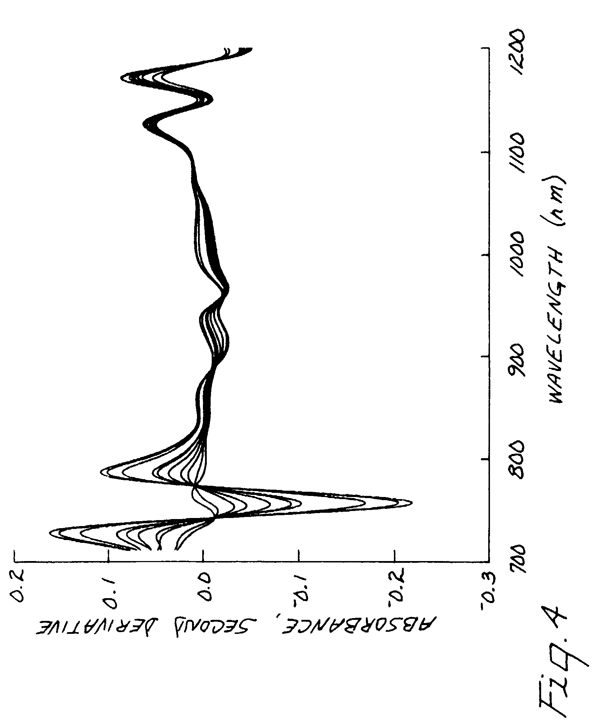

The representative group of spectra in FIG. 3 were re-depicted in FIG. 4 after the second derivative pre-processing has been performed. As may be readily seen, the variations in absorbances as caused by baseline offsets and other variances from spectrum to spectrum were minimized, permitting better attempted mathematical correlation.

The second derivative pre-processing technique computed a transformed absorbance value for all of the wavelengths in order to find the best correlation. Table II below identifies the best wavelength for each of the five sets and the corresponding multiple correlation coefficient, regression coefficients, and SEC for each set file models.

TABLE II

| Hematocrit - Each Set Determined Individually | | | | | |
|---|---|---|---|---|---|
| Data Set | Wavelength | Intercept | Slope | Multiple R | SEC |
| A | 1162 nm | 18.78 | 452.1 | 0.952 | 1.97% |
| B | 1161 | 20.88 | 471.7 | 0.989 | 0.93% |
| C | 1162 | 20.40 | 453.2 | 0.992 | 0.70% |
| D | 1160 | 24.91 | 501.2 | 0.979 | 1.48% |
| E | 1165 | 19.70 | 395.8 | 0.977 | 1.59% |

For each of the five sets, the best wavelength selected correlated to a strong absorbance peak for water. The values of the intercept and slope to form the linear functional equation for each data set were also provided. The standard error was excellent, within the percentage standard error which could be expected for determination of hematocrit by centrifugation. Thus, applying the multiple derivation transformation pre-processing technique, variability was minimized when using a wavelength corresponding to the absorbance of the water in whole blood.

It is important to note that the multiple correlation coefficient for each of five data sets is at least 0.95, which permitted at least qualitative confirmation of the hypothesis that there is near linear correlation between the prediction of hematocrit and the actual values to be measured using more expensive, less rapid techniques.

<u>Example 2</u>

The data in Table I were subjected to the same second derivative transformation pre-processing technique as that used in Example 1, except that all five data sets A-E were combined for determining the best wavelength. Such pre-processing technique yielded a number of possibilities equal to the number of spectral datapoints, and mathematical regression analysis such as that described with reference to FIG. 2 must be employed to determine the best absorbance wavelength and to establish the mathematical correlation to which the unknown sample's spectra may be compared. The following mathematical correlation equation was derived to establish the training set spectra for comparison of unknown samples of whole blood where hematocrit was desired to be measured:

% Hematocrit = 20.33 + 419.8 * (Second Derivative of spectral intensity at 1163nm)

The overall correlation coefficient for the combined sets A-E was 0.945 and standard error of calibration (SEC) was 2.20 percent. Thus, qualitatively, use of the combined sets A-E permits confirmation of the hypothesis of correlation of near linearity of relationship between analyzed values and actual values determined by other known methods. Further, quantitatively, the standard error established that the correlation was a good model for use in predicting unknown samples, i.e., within two and one-half percent of the actual values measured by a known method.

Graphically, the correlation of the wavelength was developed using the Near Infrared Spectral Analysis software described above or other software such as that available from Research Systems Inc., copyright 1982-1988 entitled "VAX IDL, Interactive Data Language". FIG. 5 identifies a correlation plot produced from the latter software which combined all datasets of this example and measured the range of correlation for the square of the multiple correlation coefficient for the various wavelengths determined by the second derivative transformation pre-processing technique. The highest peak or trough appeared around 1160-65 nm, indicating graphically the best mathematical correlation for second derivative transformation appeared at a strong water absorbance peak.

In this example, another area of correlation was observed, around 890 nm. However, absorbance at this wavelength is largely due to oxyhemoglobin, only one of several forms of hemoglobin. It is known at around 890 nm that depending upon the oxygen saturation of the samples, hemoglobin may absorb both in the form of oxyhemoglobin and deoxyhemoglobin. By choosing to concentrate on the water absorbance peak around 1160-65 nm, where there is far less absorbance of either form of hemoglobin, the mathematical correlations achieved were more accurate.

Example 3

The same spectral data was used to compare with independent quantification of the concentration of hemoglobin. Because set A had no independent quantifications of hemoglobin, sets B-E were subjected to the same steps of analysis as for hematocrit in Examples 1 and 2. Table III shows the analysis of each set B-E modeled individually.

TABLE III

| Hemoglobin - Each Set Determined Individually | | | | | |
| --- | --- | --- | --- | --- | --- |
| Data Set | Wavelength | Intercept | Slope | Multiple R | SEC |
| B | 1162 | 6.48 | 158.5 | 0.990 | 0.30g/dL |
| C | 1162 | 7.04 | 147.0 | 0.986 | 0.30 |
| D | 1161 | 7.53 | 158.4 | 0.977 | 0.55 |
| E | 1164 | 7.19 | 150.0 | 0.986 | 0.44 |

Sets B-E were then combined and subjected to second derivative transformation and the same regression analysis to determine the best wavelength for the mathematical correlation between actual and predicted hemoglobin. The result of the regression analysis to determine the best wavelength yielded 1163 nm, again in the area of the strong absorbance peak of water.

The mathematical correlation was developed:

Concentration of Hemoglobin = 6.84 + 148.0 * (Second Derivative of the spectral intensity at 1163 nm)

The overall correlation coefficient for the combined sets B-E was 0.952 and the standard error of calibration (SEC) was 0.73 g/dL. Both results showed the presence of a model as accurate as the mathematical correlation for percent hematocrit of Example 2. FIG 6. is a correlation plot of the concentration of hemoglobin using the multiple correlation coefficients obtained from this Example. An overlay of the plots of FIGS. 5 and 6 demonstrated the correlation of the hematocrit and concentration of hemoglobin using the methods of the present invention.

Example 4

In order to simulate the prediction of an unknown sample, each of the five sets was treated as an unknown set and compared to the training set spectra of the combination of all five data sets. Applying the second derivative transformation pre-processing techniques and regression analysis of Example 2 as depicted in FIG. 2, i.e., using the mathematical equation described in Example 2 above, Table IV below shows the results for predicting the hematocrit for each of the five data sets as compared with the combined data sets of all five.

TABLE IV

| Second Derivative Pre-Processing Technique And Prediction Correlations For Each Set Against The Combination Of All Sets at 1163 nm | | | |
|---|---|---|---|
| Sets | Multiple R | SEC | Bias |
| A | 0.951 | 2.85% | 1.99% |
| B | 0.989 | 1.45% | 1.05% |
| C | 0.992 | 0.97% | 0.60% |
| D | 0.978 | 1.59% | -0.39% |
| E | 0.976 | 3.46% | -2.95% |

As may be seen by comparing the results of the multiple correlation coefficient for each set in Tables II and IV, the correlation coefficients were very similar and in some cases identical.

The standard error of calibration (SEC) was within 3.5 percent, demonstrating quantitatively that correlation between predicted values and actual values measured by known methods yielded a correlation coefficient greater than 0.95 in all cases.

Here, the bias ranged from a -2.95 to 1.99 percent, demonstrating that variability due to instrumentation or sampling differences was nearly eliminated by use of the pre-processing technique as described with reference to FIG. 2 on a robust number of training samples having a broad range of hematocrit percentages.

From this data, it was determined that the pre-processing technique in combination with the regression mathematical analysis depicted in FIG. 2 established an acceptable spectral analytical method for determining of hematocrit.

Example 5

As counterpoint to the prediction in Example 4 of the data of Example 2, this example performed the same prediction for the hemoglobin Example 3. The results shown in Table V were comparable to hematocrit.

TABLE V

| Second Derivative Pre-Processing Technique and Prediction Correlations for Each Set B-E Against the Combination of All Sets B-E at 1163 nm | | | |
|---|---|---|---|
| Sets | Multiple R | SEC(g/dL) | Bias(g/dL) |
| B | 0.990 | 0.66 | 0.57 |
| C | 0.986 | 0.47 | 0.34 |
| D | 0.977 | 0.55 | 0.07 |
| E | 0.986 | 1.10 | -0.97 |

Example 6

As further evidence of the ability of the method of the present invention to establish a training set of spectral data for comparison with an unknown sample, each of the five sets were analyzed individually as training sets for the purposes of predicting some or all of the other sets simulated as unknown samples. The same second derivative pre-processing technique and regression mathematical analysis as used for Examples 2 and 4 were employed In this Example. The equation used in each prediction was the second derivative at 1163 nm times the applicable slope, added to the applicable intercept as seen in Table VI below.

Table VI identifies the prediction results which demonstrates Standard Errors of Prediction for unknown set E as small as under 6 percent and bias less than 6 percent, with the other SEP's under 3.5 percent and bias under 3 percent. These results were a better indication than the results of Example 4 to demonstrate the ability of the method of the present invention to predict hematocrit in unknown whole blood because the data sets were segregated for the purposes of establishing the training set spectra and simulating the unknown sampling.

TABLE VI

| Second Derivative Pre-Processing Technique and Prediction Correlations For Each Set As A Known Set Against Other Set(s) As Unknown Samples--Hematocrit at 1163 nm | | | | | | | |
|---|---|---|---|---|---|---|---|
| Known Set | Multiple R | SEC | Slope | Intercept | Unknown Set | SEP | Bias |
| A* | 0.951 | 1.97% | 452.08 | 18.78 | B | 1.37% | -0.97% |
|  |  |  |  |  | C | 1.73% | -1.54% |
|  |  |  |  |  | D | 2.92% | -2.41% |
|  |  |  |  |  | E | 5.41% | -5.04% |
| B | 0.989 | 0.94% | 451.07 | 19.81 | A | 2.21% | 0.97% |
|  |  |  |  |  | C | 0.91% | 0.59% |
| C | 0.992 | 0.71% | 453.21 | 20.40 | A | 2.55% | 1.58% |
|  |  |  |  |  | B | 1.13% | 0.59% |
| D | 0.978 | 1.54% | 419.39 | 20.73 | E | 3.11% | -2.56% |
| E | 0.976 | 1.64% | 442.11 | 22.59 | D | 3.15% | 2.66% |

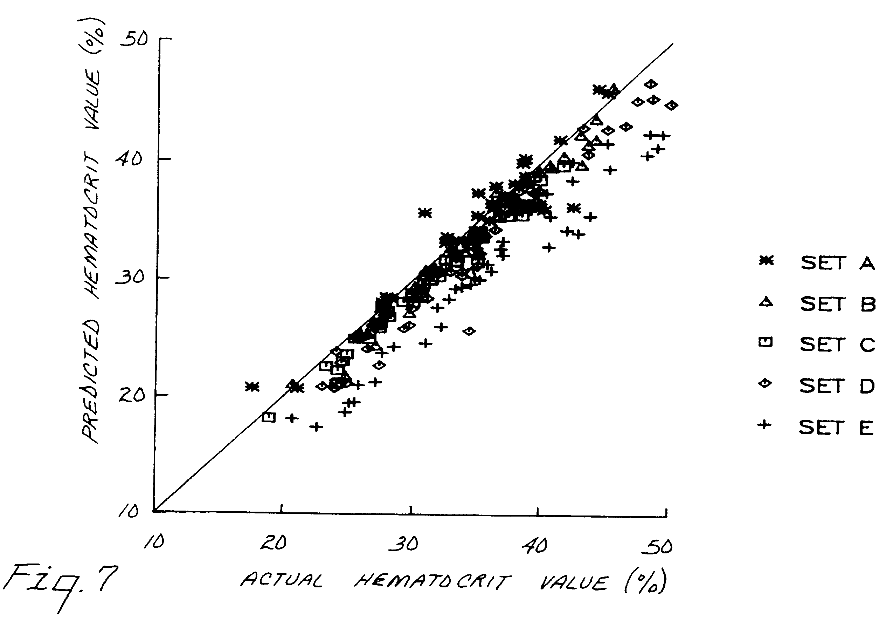

\* This set is graphically represented in FIG. 7.

The results of Example 6 seen in Table VI demonstrated the ability of the second derivative transformation pre-processing technique and mathematical regression analysis to predict hematocrit in an unknown sample of blood. The SEP results demonstrated consistent accuracy within less than six percent, with any effect of bias as less than six percent either direction from linear correlation.

Example 7

As further evidence of the ability of the method of the present invention to establish a training set of spectral data for comparison with an unknown sample, each of sets B-E were analyzed individually as a training set spectra for the purposes of predicting some or all of the other sets simulated as unknown samples. The same derivative pre-processing technique and regression mathematical analysis as used for Examples 3 and 5 were employed in these Examples. The equation used in each prediction was the second derivative at 1163 nm times the applicable slope, added to the applicable intercept as seen in Table VII below.

Table VII identifies the prediction results which demonstrate Standard Errors of Prediction as small as less than two g/dL and bias less than 1.6 g/dL using the second derivative value at 1163 nm wavelength. These results were a better indication than the results of Example 5 to demonstrate the ability of the method of the present invention to accurately predict hemoglobin in unknown whole blood because the data sets were segregated for the purposes of establishing the training set spectra and simulating the unknown sampling.

TABLE VII

| Second Derivative Pre-Processing Technique and Prediction Correlations For Each Set As A Known Set Against Other Set(s) As Unknown Samples--Hemoglobin 1163 Wavelength | | | | | | | |
|---|---|---|---|---|---|---|---|
| Known Set | Multiple R | SEC (g/dL) | Slope | Intercept | Unknown Set | SEP (g/dL) | Bias (g/dL) |
| B | 0.990 | 0.30 | 158.45 | 6.48 | C | 0.42 | -0.26 |
|  |  |  |  |  | D | 0.76 | -0.50 |
|  |  |  |  |  | E | 1.66 | -1.56 |
| C | 0.986 | 0.30 | 147.02 | 7.04 | B | 0.38 | 0.19 |
|  |  |  |  |  | D | 0.64 | -0.32 |
|  |  |  |  |  | E | 1.46 | -1.33 |
| D | 0.977 | 0.55 | 145.68 | 6.85 | B | 0.60 | 0.50 |
|  |  |  |  |  | C | 0.42 | 0.29 |
|  |  |  |  |  | E | 1.16 | -1.03 |
| E | 0.986 | 0.44 | 156.21 | 7.56 | B | 1.64 | 1.58 |
|  |  |  |  |  | C | 1.36 | 1.29 |

TABLE VII   (continued)

| Second Derivative Pre-Processing Technique and Prediction Correlations For Each Set As A Known Set Against Other Set(s) As Unknown Samples--Hemoglobin 1163 Wavelength | | | | | | | |
|---|---|---|---|---|---|---|---|
| Known Set | Multiple R | SEC (g/dL) | Slope | Intercept | Unknown Set | SEP (g/dL) | Bias (g/dL) |
| | | | | | D | 1.25 | 1.08 |

Embodiments of the invention have been described using examples. However, it will be recognized that the scope of the invention is defined by the appended claims.

**Claims**

1. A method for analysing a property of biological matter having a water content, the biological matter comprising a first compartment related to the property to be analyzed and a second compartment having a proportionally larger or smaller amount of water than the first compartment, the method comprising:

   (a) irradiating with near infrared light multiple samples of biological matter;
   (b) detecting the near infrared spectrum of each of said multiple samples;
   (c) applying, in respect of each of said multiple samples, a pre-processing technique to a near infrared absorbance peak attributable to combinations of the symmetric O-H stretching, the antisymmetric O-H stretching and the O-H bending mode in molecules of water in said samples;
   (d) independently quantifying the property to be analyzed for each of said multiple samples;
   (e) establishing a training set from said absorbance peak in said pre-processed near infrared spectra of said multiple samples and said independently quantified property by statistically identifying the nature of a mathematical correlation between the property to be analyzed and the pre-processed absorbance peak in said samples;
   (f) irradiating an unknown sample of the biological matter with near infrared light;
   (g) detecting the near infrared spectrum, including said absorbance peak, of said unknown sample;
   (h) applying said pre-processing technique to said absorbance peak in said spectrum of said unknown sample; and
   (i) predicting the property to be analyzed in said unknown sample by utilizing said mathematical correlation obtained in said statistically identifying step (e).

2. A method according to claim 1, wherein said statistically identifying step (e) uses linear regression analysis, multiple linear regression analysis, stepwise regression analysis, or partial least squares regression analysis.

3. A method according to claim 1 or claim 2, wherein said mathematical correlation in said statistically identifying step (e) comprises a linear function related to said near infrared absorbance peak of water in the absorbance spectra of said multiple samples subjected to said pre-processing technique.

4. A method according to any preceding claim, wherein said pre-processing technique comprises transforming said spectra of said multiple samples of said training set spectra by computing a multiple derivative of said spectra.

5. A method according to claim 4, wherein said multiple derivative is the second derivative.

6. A method according to any preceding claim, wherein the biological matter is whole blood and the property of the first compartment to be analyzed is hematocrit or hemoglobin concentration in the whole blood.

7. A method according to any preceding claim, wherein the biological matter is whole blood and said absorbance peak of water occurs in the near infrared spectra from about 1150 to about 1190 nanometers.

8. A method according to any preceding claim, wherein said detecting step (b) and said detecting step (g) use spectral analysis instrumentation which records said absorbance spectra of said multiple samples and said unknown sample in a static condition.

9. A method according to any preceding claim, wherein the property to be analyzed is hematocrit concentration and said mathematical correlation solves the equation:

$$Y = b + m * \text{(Second Derivative of the spectral intensity at wavelength X)}$$

where Y is % Hematocrit; b ranges from about 18 to about 23; m ranges from about 419 to about 454; and X ranges from about 1160 to about 1165 nm.

10. A method according to any of claims 1 to 8, wherein the property to be analyzed is concentration of hemoglobin and said mathematical correlation solves the equation:

$$Y = b + m * \text{(Second Derivative of the spectral intensity of wavelength at X)}$$

where Y is the Concentration of Hemoglobin (in g/dL); b ranges from about 6.45 to about 7.6; m ranges from about 145 to about 159; and X ranges from about 1160 to about 1165.

11. A method according to claim 1, wherein there is a complementary relationship between the property to be analyzed and the water content.

12. A method according to any preceding claim, wherein said multiple samples are of at least one known organism of a given biological species.

13. A method according to claim 12, further comprising the steps of:

(1) obtaining additional samples of biological matter from an organism of said given species;
(2) performing steps (a), (b), (c), and (d) with respect to said additional samples;
(3) predicting the property to be analyzed in said additional samples by utilising said mathematical correlation obtained in said statistically identifying step (e); and
(4) validating said mathematical correlation by comparing the property predicted in step (3) to the property independently quantified in step (d).

14. A method for the analysis of a biological fluid having a water content, comprising:

gathering near-infrared spectral data of multiple samples of a biological fluid of at least one organism, where the biological fluid may be approximated to comprise two compartments where one compartment has a proportionally different amount of water than the other compartment which has a property of interest;
determining, in respect of each of said multiple samples, the best absorbance detection point comprising a near infrared absorbance peak attributable to combinations of the symmetric O-H stretching, the antisymmetric O-H stretching and the O-H bending mode in molecules of water in said multiple samples;
independently measuring the property to be analyzed in each of said multiple samples;
identifying a mathematical correlation between the property to be analyzed and a feature of the absorbance peak, and
analysing an unknown sample of the biological fluid to predict the property to be analyzed in said unknown sample by applying said mathematical correlation to said absorbance peak in a near infrared spectrum of said unknown sample.

15. A method according to claim 14, wherein a correlation is identified between a multiple derivative of said absorbance peak of said samples and the property to be analyzed and in said analysing step, said mathematical correlation is applied to the multiple derivative of the near infrared spectrum of the unknown sample.

**Patentansprüche**

1. Verfahren zum Analysieren einer Eigenschaft von biologischem, einen Wassergehalt aufweisendem Material in einem dynamischen Zustand, welches biologische Material ein erstes Kompartiment in bezug auf die erste zu analysierende Eigenschaft umfaßt, sowie ein zweites Kompartiment mit einer proportional größeren oder kleineren Wassermenge als das erste Kompartiment, welches Verfahren umfaßt:

(a) Bestrahlen von Mehrfachproben des biologischen Materials mit Nahem Infrarotlicht;

(b) Detektieren des Nahen Infrarotabsorptionsspektrums jeder der Mehrfachproben;

(c) Anwenden einer Methode der Vorbearbeitung auf den Absorptionspeak im Nahen Infrarotspektrum jeder der Mehrfachproben, welcher Peak Kombinationen der symmetrischen O-H-Streckung und der antisymmetrischen O-H-Streckung und dem O-H-Biegemode in Molekülen des Wassers in den Proben zugeordnet werden kann;

(d) unabhängig Quantifizieren der zu analysierenden Eigenschaft für jede der Mehrfachproben;

(e) Aufstellen einer Eichreihe aus dem Absorptionspeak in den vorbearbeiteten Nahen Infrarotabsorptionsspektren der Mehrfachproben und der unabhängig quantifizierten Eigenschaft durch statistisches Identifizieren der Beschaffenheit einer mathematischen Korrelation zwischen der zu analysierenden Eigenschaft und dem vorbearbeiteten Absorptionspeak in den Proben;

(f) Bestrahlen einer unbekannten Probe des biologischen Materials mit Nahem Infrarotlicht;

(g) Detektieren des Nahen Infrarotabsorptionsspektrums einschließlich des Absorptionspeak der unbekannten Probe;

(h) Anwenden der Methode der Vorbearbeitung auf den Absorptionspeak in dem Spektrum der unbekannten Probe; sowie

(i) Vorhersagen der zu analysierenden Eigenschaft in der unbekannten Probe durch Anwenden der in dem Schritt (e) des statistische Identifizierens erhaltenen mathematischen Korrelationen.

2. Verfahren nach Anspruch 1, bei welchem der Schritt (e) des statistische Identifizierens lineare Regressionsanalyse, multiple lineare Regressionsanalyse, stufenweise Regressionsanalyse oder partielle Regressionsanalyse der kleinsten Quadrate verwendet.

3. Verfahren nach Anspruch 1 oder 2, bei welchem die mathematische Korrelation in dem Schritt (e) zum statistischen Identifizieren eine lineare Funktion in Bezug auf den Nahe Infrarotabsorptionspeak von Wasser in den Absorptionsspektren der Mehrfachproben ist, die der Methode der Vorbearbeitung unterworfen werden.

4. Verfahren nach einem der vorgenannten Ansprüche, bei welchem die Methode der Vorbearbeitung die Transformation der Spektren der Mehrfachproben der Spektren der Eichreihe durch Berechnen der mehrfachen Ableitung dieser Spektren umfaßt.

5. Verfahren nach Anspruch 4, bei welchem die mehrfache Ableitung die zweite Ableitung ist.

6. Verfahren nach einem der vorgenannten Ansprüche, bei welchem das biologische Material Vollblut ist und die zu analysierende Eigenschaft des ersten Kompartiments die Konzentration von Hämatokrit oder Hämoglobin in dem Vollblut ist.

7. Verfahren nach einem der vorgenannten Ansprüche, bei welchem das biologische Material Vollblut ist und der Absorptionspeak von Wasser in den Spektren des Nahen Infrarot bei etwa 1150 bis etwa 1190 Nanometer auftritt.

8. Verfahren nach einem der vorgenannten Ansprüche, bei welchem in dem Schritt des Detektierens (b) und dem Schritt des Detektierens (g) ein Geräteaufbau der Spektralanalyse verwendet wird, mit dem die Absorptionsspektren der Mehrfachproben und der unbekannten Probe in einem statischen Zustand aufgezeichnet werden.

9. Verfahren nach einem der vorgenannten Ansprüche, bei welchem die zu analysierende Eigenschaft Hämatokritkonzentration ist und die mathematische Korrelation die Gleichung löst:

$$Y = b + m* \text{ (Zweite Ableitung der spektralen Intensität bei der Wellenlänge X)},$$

worin Y Prozent Hämatokrit ist, b im Bereich von etwa -18 bis etwa -23 liegt, m im Bereich von etwa 419 bis etwa 454 liegt, X im Bereich von etwa 1160 bis etwa 1165 Nanometer.

10. Verfahren nach einem der vorgenannten Ansprüche, bei welchem die zu analysierende Eigenschaft Hämatokritkonzentration ist und die mathematische Korrelation die Gleichung löst:

Y = b + m* (Zweite Ableitung der spektralen Intensität bei der Wellenlänge X),

worin Y Hämoglobinkonzentration (in g/dl) ist, b im Bereich von etwa 6,45 bis etwa 7,6 liegt, m im Bereich von etwa 145 bis etwa 159 liegt, X im Bereich von etwa 1160 bis etwa 1165 Nanometer.

**11.** Verfahren nach Anspruch 1, bei welchem es eine komplementäre Beziehung zwischen der zu analysierenden Eigenschaft und dem Wassergehalt gibt.

**12.** Verfahren nach einem der vorgenannten Ansprüche, bei welchem die Mehrfachproben von mindestens einem bekannten Organismus einer vorgegebenen biologischen Species sind.

**13.** Verfahren nach Anspruch 12, ferner umfassend die Schritte:

(1) Erhalten von zusätzlicher Proben von biologischem Material von einem Organismus der vorgegebenen biologischen Species;
(2) Ausführen der Schritte (a), (b), (c) und (d) in bezug auf die zusätzlichen Proben;
(3) Vorhersagen der zu analysierenden Eigenschaft in den zusätzlichen Proben durch Anwenden der mathematischen Korrelation, die im Schritt (e) zum statistischen Identifizieren erhalten wurde; und
(4) Validieren der mathematischen Korrelation durch Vergleichen der in Schritt (3) vorhergesagten Eigenschaft mit der in Schritt (d) unabhängig quantifizierten Eigenschaft.

**14.** Verfahren für die Analyse eines biologischen Fluids, das einen Wassergehalt aufweist, umfassend:

Erfassen von Daten des Nahen Infrarotspektrums von Mehrfachproben eines biologischen Fluids von mindestens einem Organismus, wobei das biologische Fluid mit zwei Kompartimenten umfassend approximiert werden kann, von denen das eine Kompartiment eine proportional verschiedene Menge Wasser als das andere Kompartiment hat, dessen Eigenschaft von Interesse ist;
Bestimmen des besten Absorptionsmeßpunktes des Nahen Infrarotspektrums jeder der Mehrfachproben, die einen Absorptionspeak Nahen Infrarot aufweisen, der Kombinationen der symmetrischen O-H-Streckung und der antisymmetrischen O-H-Streckung und dem O-H-Biegemode in Molekülen des Wassers in den Mehrfachproben zugeordnet werden kann;
unabhängiges Messen der interessierenden Eigenschaft in jeder der Mehrfachproben;
Identifizieren einer mathematischen Korrelation zwischen der zu analysierenden Eigenschaft und einem Merkmal des Absorptionspeaks; sowie
Analysieren einer unbekannten Probe des biologischen Fluids, um die zu analysierende Eigenschaft in der unbekannten Probe vorherzusagen, indem die mathematische Korrelation auf den Absorptionspeak in einem Nahen Infrarotspektrum der unbekannten Probe angewendet wird.

**15.** Verfahren nach Anspruch 14, bei welchem eine Korrelation zwischen einer mehrfachen Ableitung des Absorptionspeaks der Proben und der zu analysierenden Eigenschaft identifiziert wird, und wobei in dem Schritt des Analysierens die mathematische Korrelation auf die mehrfache Ableitung des Nahen Infrarotspektrums der unbekannten Probe angewendet wird.

**Revendications**

**1.** Procédé pour analyser une propriété d'une matière biologique ayant une certaine teneur en eau, la matière biologique comprenant un premier compartiment concernant la propriété à analyser et un deuxième compartiment ayant une quantité d'eau proportionnellement supérieure ou inférieure à celle du premier compartiment, le procédé consistant à :

(a) irradier avec une lumière dans le proche infrarouge des échantillons multiples de matière biologique ;
(b) détecter le spectre dans le proche infrarouge de chacun desdits échantillons multiples ;
(c) appliquer, pour chacun desdits échantillons multiples, une technique de prétraitement à un pic d'absorbance dans le proche infrarouge pouvant être attribué à des combinaisons de l'extension O-H symétrique, de l'extension O-H antisymétrique et du mode de rebroussement O-H dans des molécules d'eau dans lesdits échantillons ;

(d) quantifier indépendamment la propriété à analyser pour chacun desdits échantillons multiples ;

(e) établir un système d'apprentissage à partir dudit pic d'absorbance dans lesdits spectres du proche infrarouge prétraités desdits échantillons multiples et de ladite propriété quantifiée indépendamment par identification statistique de la nature d'une corrélation mathématique entre la propriété à analyser et le pic d'absorbance prétraité dans lesdits échantillons ;

(f) irradier un échantillon inconnu de la matière biologique avec une lumière dans le proche infrarouge ;

(g) détecter le spectre dans le proche infrarouge, y compris ledit pic d'absorbance, dudit échantillon inconnu ;

(h) appliquer ladite technique de prétraitement audit pic d'absorbance dans ledit spectre dudit échantillon inconnu ; et

(i) prédire la propriété à analyser dans ledit échantillon inconnu par utilisation de ladite corrélation mathématique obtenue dans ladite étape d'identification statistique (e).

2. Procédé selon la revendication 1, dans lequel ladite étape d'identification statistique (e) utilise une analyse par régression linéaire, une analyse par régression linéaire multiple, une analyse par régression par étapes, ou une analyse par régression des moindres carrés partielle.

3. Procédé selon la revendication 1 ou 2, dans lequel ladite corrélation mathématique dans ladite étape d'identification statistique (e) comprend une fonction linéaire concernant ledit pic d'absorbance dans le proche infrarouge de l'eau dans les spectres d'absorbance desdits échantillons multiples soumis à ladite technique de prétraitement.

4. Procédé selon l'une quelconque des revendications précédentes, dans lequel ladite technique de prétraitement comprend la transformation desdits spectres desdits échantillons multiples desdits spectres du système d'apprentissage par calcul d'une dérivée multiple desdits spectres.

5. Procédé selon la revendication 4, dans lequel ladite dérivée multiple est la dérivée seconde.

6. Procédé selon l'une quelconque des revendications précédentes, dans lequel la matière biologique est du sang entier et la propriété du premier compartiment à analyser est la concentration d'hématocrites ou d'hémoglobine dans le sang entier.

7. Procédé selon l'une quelconque des revendications précédentes, dans lequel la matière biologique est le sang entier et ledit pic d'absorbance de l'eau se produit dans les spectres du proche infrarouge allant d'environ 1150 à environ 1190 nanomètres.

8. Procédé selon l'une quelconque des revendications précédentes, dans lequel ladite étape de détection (b) et ladite étape de détection (g) utilisent une instrumentation d'analyse spectrale qui enregistre lesdits spectres d'absorbance desdits échantillons multiples et dudit échantillon inconnu dans un état statique.

9. Procédé selon l'une quelconque des revendications précédentes, dans lequel la propriété à analyser est la concentration d'hématocrites et ladite corrélation mathématique résout l'équation :

$$Y = b + m * (\text{dérivée seconde de l'intensité spectrale à la longueur d'onde X})$$

dans laquelle Y est le pourcentage d'hématocrites ; b est situé dans l'intervalle allant d'environ 18 à environ 23 ; m est situé dans l'intervalle allant d'environ 419 à environ 454 ; et X est situé dans l'intervalle allant d'environ 1160 à environ 1165 nm.

10. Procédé selon l'une quelconque des revendications 1 à 8, dans lequel la propriété à analyser est la concentration d'hémoglobine et ladite corrélation mathématique résout l'équation :

$$Y = b + m * (\text{dérivée seconde de l'intensité spectrale de longueur d'onde à X})$$

dans laquelle Y est la concentration d'hémoglobine (en g/dl) ; b est situé dans l'intervalle allant d'environ 6,45 à environ 7,6 ; m est situé dans l'intervalle allant d'environ 145 à environ 159 ; et X est situé dans l'intervalle allant d'environ 1160 à environ 1165.

**11.** Procédé selon la revendication 1, dans lequel il y a une relation complémentaire entre la propriété à analyser et la teneur en eau.

**12.** Procédé selon l'une quelconque des revendications précédentes, dans lequel lesdits échantillons multiples proviennent d'au moins un organisme connu d'un type biologique donné.

**13.** Procédé selon la revendication 12, comprenant en outre les étapes consistant à :

(1) obtenir des échantillons additionnels de matière biologique à partir d'un organisme dudit type donné ;
(2) réaliser les étapes (a), (b), (c) et (d) pour lesdits échantillons additionnels ;
(3) prédire la propriété à analyser dans lesdits échantillons additionnels par utilisation de ladite corrélation mathématique obtenue dans ladite étape d'identification statistique (e) ; et
(4) valider ladite corrélation mathématique par comparaison de la propriété prédite dans l'étape (3) à la propriété indépendamment quantifiée dans l'étape (d).

**14.** Procédé pour l'analyse d'un fluide biologique ayant une certaine teneur en eau, consistant à :

rassembler des données spectrales dans le proche infrarouge d'échantillons multiples d'un fluide biologique provenant d'au moins un organisme, où le fluide biologique peut être rapproché d'un cas comprenant deux compartiments, où un compartiment a une quantité d'eau proportionnellement différente de celle de l'autre compartiment qui a une propriété à laquelle on s'intéresse ;
déterminer, pour chacun desdits échantillons multiples, le meilleur point de détection d'absorbance comprenant un pic d'absorbance dans le proche infrarouge pouvant être attribué à des combinaisons de l'extension O-H symétrique, de l'extension O-H antisymétrique et du mode de rebroussement O-H dans des molécules d'eau dans lesdits échantillons ;
mesurer indépendamment la propriété à analyser dans chacun desdits échantillons multiples ;
identifier une corrélation mathématique entre la propriété à analyser et une caractéristique du pic d'absorbance, et
analyser un échantillon inconnu du fluide biologique pour prédire la propriété à analyser dans ledit échantillon inconnu par application de ladite corrélation mathématique audit pic d'absorbance dans un spectre dans le proche infrarouge dudit échantillon inconnu.

**15.** Procédé selon la revendication 14, dans lequel une corrélation est identifiée entre une dérivée multiple dudit pic d'absorbance desdits échantillons et la propriété à analyser et, dans ladite étape d'analyse, ladite corrélation mathématique est appliquée à la dérivée multiple du spectre dans le proche infrarouge de l'échantillon inconnu.

Fig. 1

*TRAINING SAMPLES*  *UNKNOWN SAMPLES*

*Fig. 2*

Fig. 3

Fig.4

EP 0 476 192 B1

Fig. 5

Fig. 6

Fig. 7